# EUROPÄISCHE PATENTSCHRIFT

(11) **EP 0 777 062 B1**
(45) Veröffentlichungstag und Bekanntmachung des Hinweises auf die Patenterteilung: **16.01.2002**
(21) Anmeldenummer: 96117331.7
(22) Anmeldetag: 29.10.1996
(51) Int. Cl.: F16D 65/12

(54) **Spannring zur Befestigung von Bremsscheiben, insbesondere Wellenbremsscheiben von Schienenfahrzeugen**
Clamp ring for fixing brake discs, in particular shaft brake discs of railway vehicles
Collier de serrage pour la fixation de disques de frein, en particulier disques de frein d'arbre de véhicules ferroviaires

(30) Priorität: 01.12.1995 DE 19544981
(43) Veröffentlichungstag der Anmeldung: 04.06.1997
(73) Patentinhaber: KNORR-BREMSE Systeme für Schienenfahrzeuge GmbH, 80809 München (DE)
(72) Erfinder: Wirth, Xaver, Dr., 85737 Ismaning (DE); Seidl, Johann, 84513 Töging (DE); Schörwerth, Mathias, 82538 Geretsried (DE)

(56) Entgegenhaltungen:
- EP-A- 0 674 115
- DE-A- 2 320 115
- DE-A- 3 132 579
- GB-A- 570 016

## Beschreibung

Die Erfindung betrifft einen Spannring nach dem Gattungsbegriff des Patentanspruches 1. Ein derartiger Spannring ist aus DE-A-3 132 579 bekannt.

Bei der Befestigung von Achs- bzw. Wellenbremsscheiben an Wellen von Schienenfahrzeugen sind unter anderem Flanschverbindungen mit Spannringen vorgesehen. Die Spannringe dieser Flanschverbindungen verhindern, daß die Verschraubung - bei einer eventuellen Veränderung der Lage der verbundenen Teile - auf Biegung beansprucht wird. Spannringe werden deshalb im allgemeinen aus einem geschlossenen Ring gefertigt. Um ein Verdrehen in Umfangsrichtung zu verhindern, sind Verdrehsicherungen verschiedener Art vorgesehen.

Wenn auf einer Achse oder Welle mehrere Bremsscheiben mit Spannringen benötigt werden, so ist bei einem eventuellen Defekt eines Spannringes ein gesamter Ausbau aller Bremsscheiben erforderlich, um den defekten Spannring ersetzen zu können. Folglich bestimmt die Anzahl der auf einer Welle verschraubten Bauteile die benötigte Montagezeit.

Die Aufgabe der Erfindung besteht darin, einen Spannring zur Flanschbefestigung von Bremsscheiben, insbesondere Wellenbremsscheiben so auszugestalten, daß sein Einsatz auch unter beengten räumlichen Verhältnissen möglich ist. Im besonderen soll es möglich sein, den Spannring dort zu verwenden, wo dies infolge räumlicher Überschneidungen bisher nicht möglich war.

Zur Lösung dieser Aufgabe dienen die Merkmale nach dem Kennzeichnungsteil des Patentanspruches 1.

Durch die mittels radialer Teilung vollzogene Aufteilung des Spannrings in wenigstens zwei Segmente ist es möglich, ihn auch unter engen baulichen Einsatzbedingungen zu verwenden, so beispielsweise im Bauraum zwischen zwei an einer Hohlwelle befestigbaren Wellenbremsscheiben von Schienenfahrzeugen. Die Segmente ihrerseits sind vorzugsweise aus zwei Lagern, also zwei Segmenthälften gebildet, welche hinsichtlich ihrer Teilung versetzt zueinander zusammengefügt werden, so daß bei einer Teilung in zwei Spannringsegmente eine Versetzung der Teile von vorzugsweise 90 ° vorgenommen wird.

Die aus Segmenten gebildeten, axial zusammengefügten Spannringhälften weisen vorzugsweise Mittel zur Verdrehsicherung bzw. zur gegenseitigen Einstellung auf, um die Durchgangsbohrungen für die Befestigungsschrauben in Fluchtung zu bringen.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.
Figur 1 ist eine Teilschnittansicht von zwei an einer Hohlwelle befestigten Wellenbremsscheiben bei Befestigung mit Hilfe von erfindungsgemäßen Spannringen;
Figur 2 ist eine Draufsicht auf einen aus zwei Segmenten und aus zwei Spannringhälften gebildeten Spannring; und
Figur 3 ist eine gegenüber Figur 1 und 2 vergrößerte Schnittansicht eines aus zwei Spannringhälften zusammengesetzten Spannringes unter Darstellung einer durch beide Spannringhälften sich erstreckenden Durchgangsbohrung für eine Befestigungsschraube.

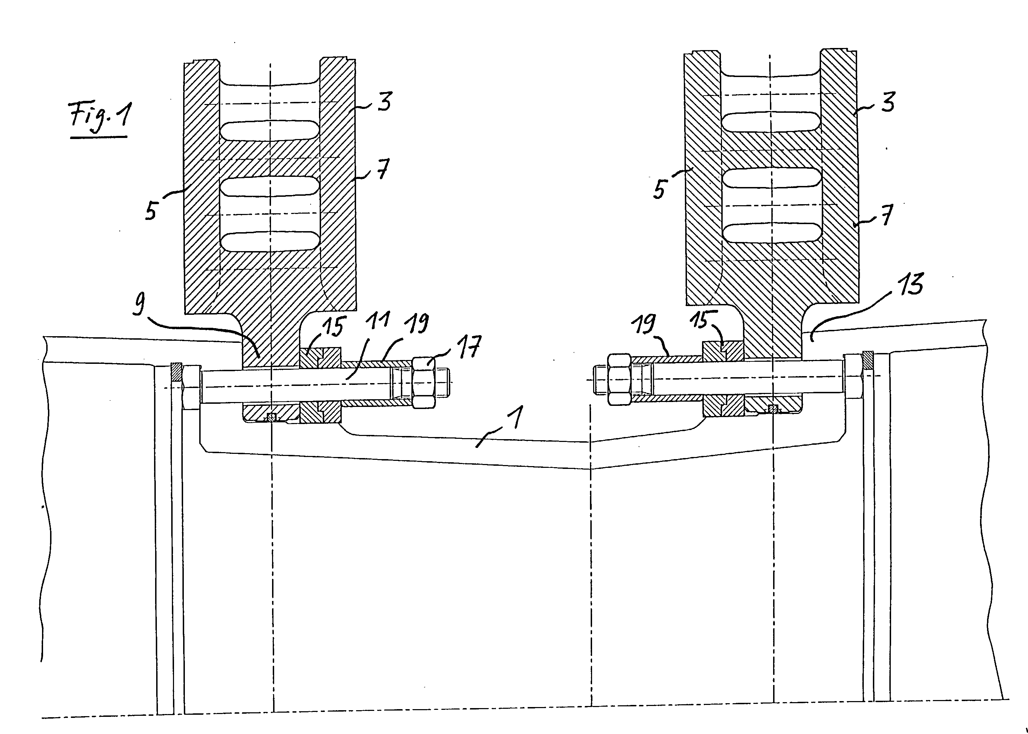

In Figur 1 der Zeichnung ist eine Welle 1 in Form einer Hohlwelle dargestellt, an welcher zwei Wellenbremsscheiben 3 befestigt sind. Die Wellenbremsscheiben 3 sind als Reibringe ausgebildet und weisen in bekannter Weise Reibringhälften 5 und 7 mit an diesen ausgebildeten Reibflächen auf. Die Reibringhälften sind durch Lüftungskanäle begrenzende Stege miteinander verbunden; die Erfindung ist jedoch nicht auf eine derartige Ausführungsform beschränkt, d.h. die Wellenbremsscheiben können z.B auch als Monoblockscheiben ausgebildet sein.

Zur Befestigung der Wellenbremsscheiben 3 sind diese am Innenumfang je mit einem Ringflansch 9 versehen, welcher mit Plansitz auf der Welle 1 geführt und durch Befestigungsschrauben 11 durchsetzt ist. Die Befestigungsschrauben 11 erstrecken sich unter Winkelabstand zueinander am Innenumfang des Ringflansches und sind jeweils axial außenseitig durch eine Ringschulter 13 der Welle 1 und innenseitig durch einen erfindungsgemäßen Spannring 15 hindurchgeführt. Der Kopf der Befestigungsschrauben ist innerhalb der Hohlwelle jeweils an die Ringschulter 13 der Welle angelegt. Am entgegengesetzten Ende der Befestigungsschrauben 11 sind Muttern 17 vorgesehen, welche gegenüber an den Spannringen 15 sich abstützenden Distanzhülsen 19 verspannbar sind.

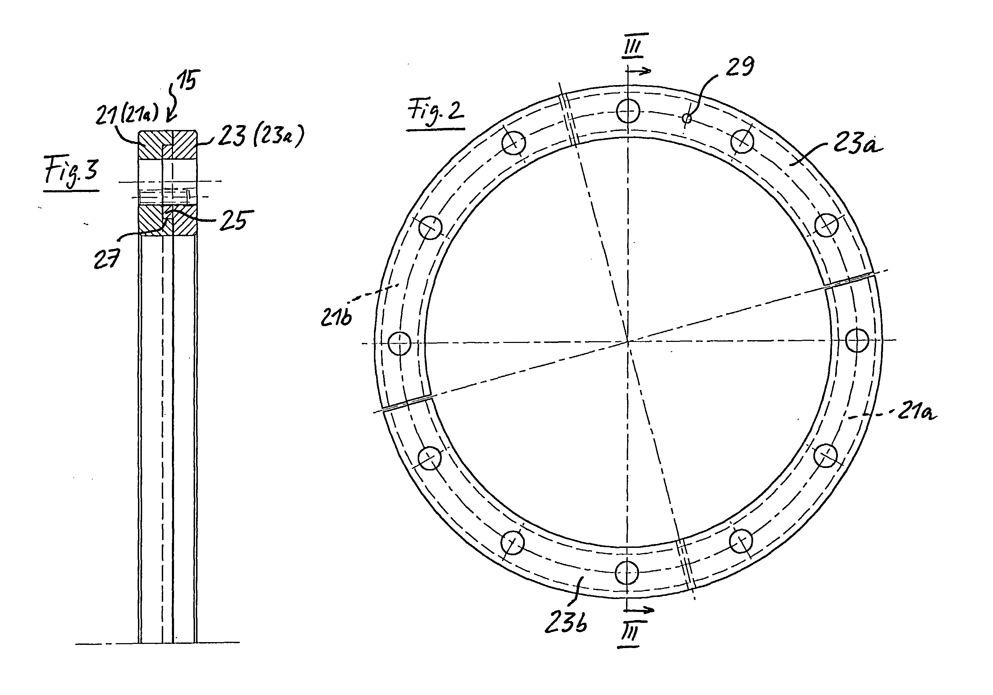

Die Spannringe 15 (Figur 2 und 3) sind aus zwei Spannringhälften 21 und 23 zusammengesetzt. Diese ihrerseits bestehen jeweils aus zumindest zwei Segmenten 21a, 21b bzw. 23a, 23b. Vorzugsweise sind die Schnitte durch die Spannringhälften 21 und 23 senkrecht zueinander gelegt, wie aus Figur 2 zu ersehen ist.

Die Spannringhälften 21 und 23 greifen ineinander (Figur 3), wobei z.B. ein axialer Fortsatz 25 der Spannringhälfte 23 in eine Nut 27 der Spannringhälfte 21 eingreift. Im Rahmen des der Erfindung eigenen Gedankens sind auch andere Möglichkeiten formschlüssigen Eingriffs zwischen den Spannringhälften gegeben. Um eine gegenseitige Verdrehung der Segmente der Spannringhälften zu vermeiden, sind zusätzlich Verdrehsicherungen vorgesehen. So kann sich von der Spannringhälfte 21 ein Stift 29 in eine Bohrung der Spannringhälfte 23 erstrecken. In gleicher Weise sind Keil- bzw. Nutverriegelungen zwischen beiden Spannringhälften möglich. Die Position dieser Verdrehsicherungen ist so gewählt, daß zur Durchführung der Befestigungsschrauben 11 dienende Bohrungen der Spannringhälften miteinander fluchten, wie die Schnittansicht nach Figur 3 veranschaulicht.

Die Lagerung der Spannringhälften zueinander ist mit Spiel ausgeführt, wobei die Tiefe der Nut 27 so ausgelegt werden muß, daß die Zug-Druck-Spannungen, welche auf die Spannringe wirken, die Lagerung nicht plastisch verformen. Die Reibkraft, die sich als Folge einer axialen Vorspannung mittels der Befestigungsschrauben in der Lagerung der Segmente zueinander aufbaut, ist um ein Vielfaches größer als die Zugspannung, welche axial auf die Spannringe wirkt, d.h. daß sich die Spannringe bzw. Spannringhälften im eingebauten Zustand jeweils als geschlossenes Bauteil verhalten.

Figur 1 der Zeichnung veranschaulicht die besonders vorteilhafte Verwendung der Spannringe 15 bei Befestigung der Wellenbremsscheiben an einer Hohlwelle. Die Montage der Spannringe kann in dem zur Verfügung stehenden Bauraum zwischen den Wellenbremsscheiben erfolgen, d.h. die Spannringe werden segmentweise zusammengesetzt. Auf diese Weise ist es möglich, die Spannringe auch in Positionen zu verwenden, in welche sie als geschlossener Ringkörper nicht eingebracht werden könnten, wie dies für die Ausführungsform nach Figur 1 der Fall ist. Die Segment-Bauweise der Spannringe ist aber auch dort vorteilhaft, wo sie wie bisher üblich über die Welle gezogen werden konnten. Mit Hilfe der erfindungsgemäßen Anordnung entfällt vorangehendes Demontieren aller Bauteile, welche für das axiale Überziehen hinderlich wären. Die Segment-Bauweise der Spannringe erweist sich nicht nur bei Erstmontage, sondern vor allem auch im Betrieb als sehr zweckmäßig und kostensparend; im dargestellten Ausführungsbeispiel nach Figur 1 ist z.B. ein Austauschen eines der Spannringe oder beider mit einem minimalen Aufwand möglich.

Die Erfindung ist nicht auf die dargestellte Art der Verwendung der Distanzhülsen 19 beschränkt, d.h. ggf. kann auch eine direkte Verschraubung der Muttern gegenüber den Spannringen vorgesehen sein.

### Bezugszeichenliste

- 1: Welle
- 3: Wellenbremsscheibe
- 5: Reibringhälfte
- 7: Reibringhälfte
- 9: Ringflansch
- 11: Befestigungsschraube
- 13: Ringschulter
- 15: Spannring
- 17: Mutter
- 19: Distanzhülse
- 21: Spannringhälfte
- 21a,b: Segment
- 23: Spannringhälfte
- 23a,b: Segment
- 25: Fortsatz
- 27: Nut
- 29: Stift

## Patentansprüche

1. Spannring zur Befestigung von Wellenbremsscheiben (13) von Schienenfahrzeugen, mit Befestigungsschrauben (11), welche den Spannring(15) und am Innenumfang der Wellenbremsscheibe (3) vorgesehene Bohrungen durchsetzen und gegenüber einer die Wellenbremsscheibe (3) tragenden Welle (1) verschraubbar sind, **gekennzeichnet durch** folgende Merkmale:
a) der Spannring (15) besteht aus wenigstens zwei axial zusammengefügten Spannringhälften (21, 23), welche mit an ihnen ausgebildeten Profilelementen (Fortsatz 25; Nut 27) ineinander greifen;
b) die Spannringhälften (21, 23) sind mittels radialer Teilungen in Segmente (21a, 21b; 23a, 23b) unterteilt; und
c) die radialen Teilungen der Spannringhälften (21, 23) sind unter einem Winkel zueinander versetzt, derart, daß die Teilungen einer Spannringhälfte (21) von der anderen Spannringhälfte (23) jeweils überdeckt sind.

2. Spannring nach Anspruch 1, **dadurch gekennzeichnet, daß** die radialen Teilungen der Spannringhälften (21, 23) unter einem Winkel von 90° zueinander versetzt sind.

3. Spannring nach einem der vorangehenden Ansprüche, **dadurch gekennzeichnet, daß** die Spannringhälften (21, 23) in mehr als zwei Segmente (21a, 21b) unterteilt sind, und daß die Segmente (21a, 21b) beider Spannringhälften (21, 23) gegenseitig unter Überlappung versetzt sind.

4. Spannring nach Anspruch 1 oder 2, **dadurch gekennzeichnet, daß** die beiden Spannringhälften (21, 23) Mittel zur Verdrehsicherung aufweisen.

5. Spannring nach Anspruch 4, **gekennzeichnet durch** einen zur Verdrehsicherung dienenden Stift (29), welcher sich jeweils **durch** die Segmente des Spannrings (15) erstreckt.

## Claims

1. Clamping ring for fixing shaft brake discs (13) of rail-bound vehicles, comprising fastening screws (11) passing through said clamping ring (15) and bores disposed at the internal periphery of said shaft brake disc (3) and adapted to be screw-fastened relative to a shaft carrying said shaft brake disc (3), **characterised by** the following features:
(a) the clamping ring (15) consists of at least two axially joined halves (21, 23) of the clamping ring, which engage in each other by profiled elements (projection 25; groove 27);
(b) said halves (21, 23) of the clamping ring are subdivided into segments (21a, 21b; 23a, 23b) by means of radial subdivisions; and
(c) the radial subdivisions of said halves (21, 23) of the clamping ring are offset from each other at an angle, such that the subdivisions of one half of the clamping ring are each covered by the respectively other half (23) of the clamping ring.

2. Clamping ring according to Claim 1, **characterised in that** said radial subdivisions of said halves (21, 23) of the clamping ring are offset from each other at an angle of 90°.

3. Clamping ring according to any of the preceding Claims, **characterised in that** said halves (21, 23) of the clamping ring are subdivided into more than two segments (21a, 21b), and that said segments (21a, 21b) of both halves (21, 23) of the clamping ring are offset from each other while overlapping each other.

4. Clamping ring according to Claim 1 or 2, **characterised in that** said two halves (21, 23) of the clamping ring comprise means for locking to prevent rotation.

5. Clamping ring according to Claim 4, **characterised by** a pin (29) serving for locking to prevent rotation, which extends through each of the segments of the clamping ring (15).

## Revendications

1. Collier de serrage pour la fixation de disques de frein (13) d'arbre de véhicules ferroviaires, comprenant des vis de fixation (11) passant à travers ledit collier de serrage (15) et des alésages, qui sont disposés à la périphérie intérieure dudit disque de frein d'arbre (3), et aptes à être fixées moyennant des vis relativement à un arbre, qui porte ledit disque de frein d'arbre (3), **caractérisé par** les caractéristiques suivantes:
(a) le collier de serrage (15) consiste en au moins deux moitiés (21, 23) du collier de serrage, qui sont jointes en sens axial et qui sont engagées l'une dans l'autre moyennant des éléments profilés (saillie 25; rainure 27):
(b) lesdites moitiés (21, 23) du collier de serrage sont divisées en segments (21a, 21b; 23a, 23b) moyennant des lignes de division radiales; et
(c) les divisions radiales desdites moitiés (21, 23) du collier de serrage se trouvent en déport l'un de l'autre à un angle de façon, que chacune des divisions d'une moitié du collier de serrage soit recouverte par l'autre moitié respective (23) du collier de serrage.

2. Collier de serrage selon la revendication 1, **caractérisé en ce que** lesdites divisions radiales desdites moitiés (21, 23) du collier de serrage se trouvent en déport l'un de l'autre à un angle de 90°.

3. Collier de serrage selon une quelconque des revendications précédentes, **caractérisé en ce que** lesdites moitiés (21, 23) du collier de serrage sont divisées en plus de deux segments (21a, 21b), et **en ce que** lesdits segments (21a, 21b) des deux moitiés (21, 23) du collier de serrage se trouvent en déport l'un de l'autre, en se chevauchant.

4. Collier de serrage selon la revendication 1 or 2, **caractérisé en ce que** lesdites deux moitiés (21, 23) du collier de serrage comprennent des moyens à serrer en empêchant une rotation.

5. Collier de serrage selon la revendication 4, **caractérisé par** une goupille (29), qui sert à serrer en empêchant une rotation et qui s'étend à travers chacun desdits segments du collier de serrage (15).
